# FASCICULE DE BREVET EUROPEEN

(11) **EP 3 238 580 B1**
(45) Date de publication et mention de la délivrance du brevet: **03.10.2018**
(21) Numéro de dépôt: 17165218.3
(22) Date de dépôt: 06.04.2017
(51) Int. Cl.: A47J 27/092

(54) **AUTOCUISEUR POURVU D'UNE OUVERTURE DE COUVERCLE**
SCHNELLKOCHTOPF, DER MIT EINER ÖFFNUNG IM DECKEL AUSGESTATTET IST
PRESSURE COOKER PROVIDED WITH A LID OPENING

(30) Priorité: 08.04.2016 FR 1653139
(43) Date de publication de la demande: 01.11.2017
(73) Titulaire: SEB S.A., 69130 Ecully (FR)
(72) Inventeur: RHETAT, Eric, 21000 DIJON (FR); JULIEN, Guillaume, 21260 SELONGEY (FR); COLAS, Thomas, Antoine, 21000 DIJON (FR)
(74) Mandataire: Weber, Jean-François

(56) Documents cités:
- EP-A1- 3 100 656
- WO-A2-2011/077037
- FR-A1- 2 958 517
- US-A- 4 733 795

## Description

La présente invention se rapporte au domaine technique général des appareils de cuisson d'aliments sous pression dans une atmosphère chargée en vapeur, de préférence à usage domestique, et en particulier aux appareils dénommés cuiseur-vapeur ou autocuiseur qui sont équipés d'un joint d'étanchéité mis en place entre leur cuve et leur couvercle pour assurer, en fonctionnement, l'étanchéité entre l'intérieur et l'extérieur de l'appareil et autoriser ainsi la montée en pression de l'appareil.

La présente invention concerne plus précisément un appareil de cuisson d'aliments sous pression comprenant :
- une cuve et un couvercle destiné à former avec ladite cuve une enceinte de cuisson,
- un joint d'étanchéité interposé entre le couvercle et la cuve pour permettre la montée en pression de l'enceinte de cuisson,
- et une ouverture ménagée à travers le couvercle en regard dudit joint d'étanchéité.

Il est déjà connu d'avoir recours à des joints d'étanchéité, par exemple en matériaux élastomères, qui sont interposés et compressés entre la cuve et le couvercle des autocuiseurs pour assurer, en particulier grâce à leur souplesse et leur aptitude à la compression, l'étanchéité de l'appareil en fonctionnement. Un appareil de cuisson d'aliments sous pression comportant ce type de joint d'étanchéité est divulgué par le document US-A-4 733 795. Il est également connu d'utiliser de tels joints en tant que dispositifs de sécurité additionnels autorisant la chute de pression au sein de l'appareil par fuite de vapeur hors de l'enceinte de cuisson. Il s'avère en effet que les dispositifs classiques et spécifiquement dédiés de sécurité équipant habituellement les appareils de cuisson sous pression, comme par exemple les soupapes de sécurité, peuvent être déficients pour de multiples raisons (vieillissement, encrassement, défaut d'entretien suffisant, colmatage, blocage, obstruction par des aliments ou autre dysfonctionnement accidentel...).

Dans de telles situations, l'enceinte de cuisson peut être amenée à monter en pression en cours de fonctionnement sans que les dispositifs classiques de sécurité puissent jouer leur rôle en permettant la dépressurisation automatique de l'appareil dès qu'un incident de ce type se produit. Dans de tels cas, il est alors déjà connu d'utiliser le joint d'étanchéité de l'appareil de cuisson sous pression en tant que moyen de sécurité additionnel en utilisant les propriétés de déformation naturelle du joint sous l'effet de la surpression régnant dans l'enceinte, laquelle surpression va déplacer le joint hors sa position d'étanchéité pour permettre un échappement de vapeur conduisant à la dépressurisation de l'enceinte.

Parmi les appareils de cuisson sous pression qui utilisent un tel mécanisme de fuite de vapeur localisée par déplacement du joint pour assurer une fonction sécuritaire additionnelle, on connaît des systèmes mettant en oeuvre un orifice pratiqué à travers le couvercle, par exemple une fenêtre ménagée dans le bord tombant du couvercle et à travers laquelle le joint est apte à se déformer radialement.

Un tel dispositif de sécurité additionnelle à fenêtre donne globalement satisfaction, puisqu'il permet d'assurer l'évacuation de l'excès de pression.

Il n'en présente pas moins certains inconvénients, liés notamment à la mise en oeuvre d'un orifice ménagé à travers le couvercle. Il existe en effet, du fait de la présence de cet orifice ménagé à travers le couvercle, un risque de voir un jet de vapeur être accidentellement projeté par l'orifice en question et atteindre directement l'utilisateur, ce qui peut brûler ce dernier.

Les objets assignés à l'invention visent en conséquence à remédier à ces inconvénients et à proposer un nouvel appareil de cuisson d'aliments sous pression qui, tout en étant capable d'empêcher de façon fiable la pression régnant au sein de l'appareil d'excéder un seuil de sécurité, limite également les risques de projection de vapeur en direction de l'utilisateur tout en permettant à ce dernier de contrôler aisément l'état fonctionnel de l'appareil et d'en assurer facilement la maintenance et le nettoyage.

Un autre objet de l'invention vise à proposer un nouvel appareil de cuisson sous pression dont la conception permet, tout en assurant une excellente sécurité de fonctionnement en cas de surpression accidentelle, un fonctionnement particulièrement fiable, robuste et maîtrisé de l'appareil en condition de surpression, permettant notamment d'éviter tout phénomène violent et de limiter la dispersion de la valeur de pression de déclenchement de la dépressurisation sécuritaire.

Un autre objet de l'invention vise à proposer un nouvel appareil de cuisson sous pression qui repose sur la mise en oeuvre d'un joint d'étanchéité dont la conception est extrêmement simple et ne nécessite aucune précaution ni compétence particulière pour son installation dans l'appareil.

Un autre objet de l'invention vise à proposer un nouvel appareil de cuisson d'aliments sous pression qui assure de manière particulièrement efficace la dépressurisation de l'appareil en cas de surpression accidentelle tout en préservant la résistance mécanique du couvercle.

Un autre objet de l'invention vise proposer un nouvel appareil de cuisson d'aliments sous pression qui permet une dépressurisation particulièrement rapide de l'appareil de cuisson d'aliments sous pression en cas de surpression accidentelle.

Un autre objet de l'invention vise à proposer un nouvel appareil de cuisson d'aliments sous pression qui repose sur une conception particulièrement adaptée à la mise en oeuvre d'un système de verrouillage/déverrouillage à baïonnette.

Un autre objet de l'invention vise à proposer un nouvel appareil de cuisson d'aliments sous pression qui, tout en étant d'utilisation particulièrement sûre, est très pratique et facile à utiliser.

Un autre objet de l'invention vise à proposer un nouvel appareil de cuisson d'aliments sous pression dont la conception est compatible avec tout type de système de verrouillage/déverrouillage du couvercle relativement à la cuve.

Un autre objet de l'invention vise à proposer un nouvel appareil de cuisson d'aliments sous pression de construction particulièrement simple et bon marché.

Les objets assignés à l'invention sont atteints à l'aide d'un appareil de cuisson d'aliments sous pression comprenant :
- une cuve et un couvercle destiné à former avec ladite cuve une enceinte de cuisson,
- un joint d'étanchéité interposé entre le couvercle et la cuve pour permettre la montée en pression de l'enceinte de cuisson,
- une ouverture ménagée à travers le couvercle en regard dudit joint d'étanchéité,
caractérisé en ce qu'il comprend également un élément de couverture, lesdits couvercle et élément de couverture étant montés mobiles l'un relativement à l'autre pour évoluer entre une première configuration dans laquelle l'élément de couverture coiffe ladite ouverture pour la masquer et une deuxième configuration dans laquelle l'élément de couverture découvre ladite ouverture, cette dernière étant ainsi accessible depuis l'extérieur.

D'autres objets et avantages de l'invention apparaîtront et ressortiront plus en détails à la lecture de la description qui suit, en référence aux dessins annexés, donnés à titre purement illustratif et non limitatif, parmi lesquels :
- La figure 1 illustre, selon une vue schématique en perspective, un appareil de cuisson d'aliments sous pression conforme à l'invention, qui se trouve dans une configuration de pré-verrouillage du couvercle relativement à la cuve.
- La figure 2 illustre l'appareil de cuisson d'aliments de la figure 1 avec le couvercle verrouillé relativement à la cuve.
- La figure 3 illustre de façon séparée et selon une vue schématique en perspective de dessus, un sous-ensemble de cuve qui fait partie de l'appareil de cuisson sous pression des figures 1 et 2.
- La figure 4 illustre, de façon séparée selon une vue schématique en perspective de dessous, un sous-ensemble de couvercle qui fait partie de l'appareil de cuisson sous pression des figures 1 et 2, et qui est destiné à être rapporté sur la cuve de la figure 3 pour former une enceinte de cuisson sous pression.
- La figure 5 illustre un couvercle métallique qui fait partie du sous-ensemble de couvercle de la figure 4.
- La figure 6 est une vue de dessus d'un détail de la figure 1.
- La figure 7 est une vue de dessus d'un détail de la figure 2.
- Les figures 8 à 10 illustrent, de façon schématique et chronologique, selon une vue en coupe transversale, les déplacement et déformation subis localement par le joint d'étanchéité équipant l'autocuiseur des figures précédentes lorsque la pression régnant au sein de l'enceinte de cuisson excède un seuil de sécurité prédéterminé, qui conduit le joint à passer d'une configuration d'étanchéité (figure 8) à une configuration locale de fuite (figure 10) via une configuration intermédiaire (figure 9).
- La figure 11 est un détail agrandi de la figure 5.
- La figure 12 illustre, selon une vue schématique en coupe, une variante alternative de réalisation du joint équipant l'appareil des figures précédentes, et qui se caractérise par un amincissement local des lèvres supérieure et inférieure du joint.
- La figure 13 illustre, selon une vue schématique en perspective, l'appareil de la figure 1 (en configuration de pré-verrouillage) sans son élément de couverture, de façon à pouvoir visualiser le mécanisme de commande du verrouillage/déverrouillage.
- La figure 14 est une vue analogue à celle de la figure 13 à la différence près que l'appareil de cuisson sous pression se trouve dans sa configuration de verrouillage illustrée la figure 2.

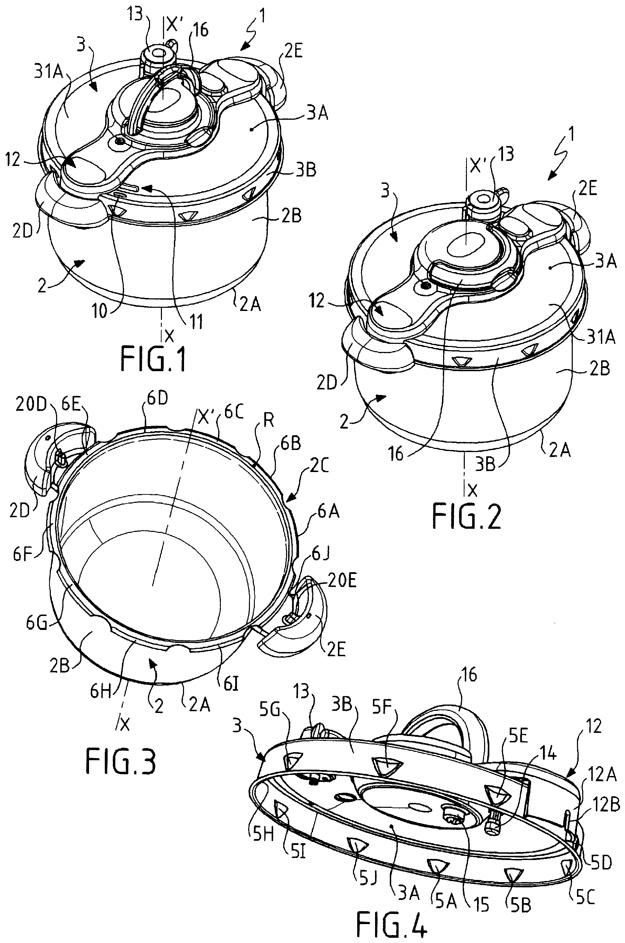

Comme illustré aux figures, l'invention concerne un appareil de cuisson 1 d'aliments sous pression, destiné à assurer la cuisson de différents aliments à un niveau de pression supérieur à la pression atmosphérique, en présence de vapeur, et par exemple de vapeur d'eau. Ladite vapeur est générée par le chauffage, au sein de l'appareil 1 et en présence des aliments, d'un liquide de cuisson, par exemple un liquide aqueux. L'appareil 1 selon l'invention est préférentiellement destiné à un usage domestique, étant entendu toutefois que l'invention peut également concerner des appareils professionnels ou semi-professionnels. L'appareil 1 conforme à l'invention est conçu pour monter en pression exclusivement sous l'effet d'une source de chauffe (embarquée ou externe), sans apport de pression externe. L'appareil 1 de cuisson d'aliments sous pression constitue donc un autocuiseur, destiné préférentiellement à être disposé sur une plaque de cuisson indépendante pour en chauffer le contenu. L'appareil de cuisson 1 conforme à l'invention comprend au moins une cuve 2 formant récipient de cuisson, destiné à accueillir les aliments à cuire et présentant en l'espèce sensiblement une symétrie de révolution selon un axe vertical central X-X', lequel s'étend selon une direction qui s'apparente à la direction verticale lorsque l'appareil 1 est en fonctionnement normal, c'est-à-dire repose sur un plan horizontal. Il est cependant tout à fait envisageable, selon une variante alternative (non illustrée) que la cuve présente non pas un contour circulaire comme illustré aux figures mais un contour ovale ou de tout autre forme, sans pour autant que l'on sorte du cadre de l'invention. La cuve 2 est de manière classique fabriquée à partir d'un matériau métallique tel que l'acier inoxydable ou l'aluminium. La cuve 2 comprend un fond 2A, qui est par exemple un fond thermo-conducteur multicouches. La cuve 2 comprend également une paroi latérale annulaire 2B qui s'élève entre ledit fond 2A et un bord supérieur libre 2C, qui est en l'espèce de forme circulaire (mais peut alternativement présenter plutôt une forme ovale ou toute autre forme), et qui délimite une ouverture d'accès à l'intérieur de la cuve 2. La conformation de ce bord supérieur libre 2C sera décrite plus en détails dans ce qui suit, en relation avec les moyens de verrouillage de l'appareil 1. Comme visible notamment sur la figure 3, le bord supérieur libre 2C de la cuve 2, qui forme la partie terminale de la paroi latérale 2B, s'étend par exemple radialement vers l'extérieur de la cuve 2 pour former au moins une surface annulaire qui définit une zone de repos R, contre et sur laquelle vient reposer un joint d'étanchéité 4 décrit plus en détails ci-après.

Avantageusement, et comme illustré aux figures, l'appareil de cuisson 1 comprend au moins une poignée de cuve 2D qui est fixée à ladite cuve 2, de façon à faire saillie extérieurement de cette dernière. Dans le mode de réalisation illustré aux figures, l'appareil de cuisson 1 comprend deux poignées identiques 2D, 2E fixées sur la paroi latérale 2B de la cuve 2 de façon diamétralement opposée par rapport à l'axe central X-X'.

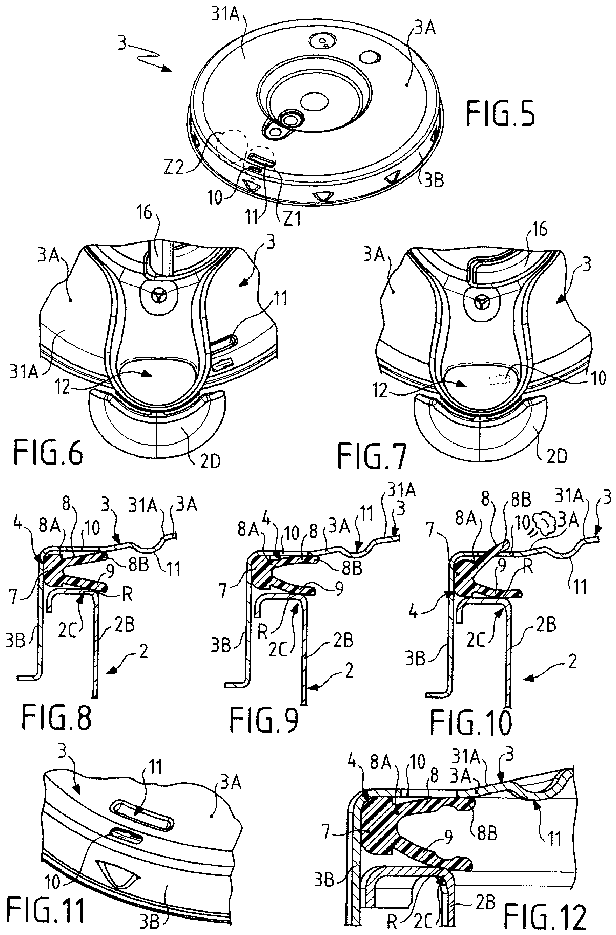

L'appareil 1 conforme à l'invention comprend également un couvercle 3 destiné à former avec ladite cuve 2 une enceinte de cuisson. Le couvercle 3 est de manière classique fabriqué à partir d'un matériau métallique tel que l'acier inoxydable ou l'aluminium. Il présente avantageusement une forme conjuguée à celle de la cuve 2, afin de pouvoir venir s'emboîter dans ou sur cette dernière, comme illustré aux figures 1 et 2 par exemple. Comme illustré aux figures, le couvercle 3 comprend avantageusement une paroi supérieure 3A qui forme un élément de fermeture de l'ouverture délimitée par le bord supérieur libre 2C de la cuve 2. La forme et les dimensions de la paroi supérieure 3A sont de préférence sensiblement conjuguées à celle de l'ouverture d'accès délimité par le bord supérieur libre 2C de la paroi latérale annulaire 2B de la cuve 2. Ladite paroi supérieure 3A peut présenter ainsi par exemple un contour périphérique sensiblement circulaire (lorsque le bord supérieur libre 2C présente lui-même un contour sensiblement circulaire) ou ovale (dans le cas d'une cuve 2 dont le bord supérieur libre 2C présente lui-même un contour ovale). Dans le mode de réalisation illustré aux figures, le couvercle 3 comprend également une jupe annulaire 3B qui s'étend à partir dudit contour périphérique de la paroi supérieure 3A. Ladite jupe annulaire 3B présente avantageusement, comme illustré aux figures, une forme sensiblement cylindrique ou tronconique et s'étend entre un premier bord solidaire de la périphérie de la paroi supérieure 3A et un second bord circulaire libre, lequel est par exemple lui-même prolongé par une collerette terminale. Comme illustré aux figures, la paroi supérieure 3A s'étend globalement selon un plan moyen horizontal, c'est-à-dire en l'espèce parallèle au plan moyen d'extension du fond 2A de la cuve 2 lorsque le couvercle 3 est associé à la cuve 2 pour former l'enceinte de cuisson, tandis que la jupe annulaire 3B forme une ceinture qui s'étend sensiblement verticalement, c'est-à-dire parallèlement à l'axe central X-X'. Cela n'exclut bien entendu aucunement que la paroi supérieure 3A puisse être bombée ou incurvée localement, par exemple pour accueillir un mécanisme de commande, comme illustré aux figures 5, 13 et 14. Dans le mode de réalisation illustré aux figures, la jupe annulaire 3B est formée par un bord tombant qui s'étend du haut vers le bas à partir de la périphérie de la paroi supérieure 3A. Dans ce mode de réalisation, le couvercle 3 est destiné à venir coiffer de façon sensiblement ajustée le sommet de la cuve 2, de sorte que la jupe annulaire 3B ceinture par l'extérieur le sommet de la paroi latérale annulaire 2B et le bord supérieur libre 2C, tandis que la paroi supérieure 3A repose en appui sur le bord libre 2C, par l'intermédiaire d'un joint d'étanchéité 4 interposé entre la cuve 2 et le couvercle 3, et qui sera décrit plus en détail ci-après. Il est cependant parfaitement envisageable que la jupe annulaire 3B soit alternativement destinée à être insérée au sein de la cuve 2, de façon à être entouré par, et contenue dans, la cuve 2, sans pour autant que l'on sorte du cadre de l'invention. La cuve 2 et le couvercle 3 constituent ainsi des enveloppes respectives complémentaires, réalisées de préférence en métal (par exemple en acier inoxydable ou en aluminium), qui une fois associées forment une enveloppe métallique résultante délimitant un volume fermé au sein duquel les aliments sont destinés à cuire sous pression de vapeur.

Afin d'empêcher la séparation du couvercle 3 de la cuve 2 sous l'effet de la montée en pression, l'appareil de cuisson 1 selon l'invention comprend classiquement un système de verrouillage/déverrouillage du couvercle 3 relativement la cuve 2, permettant à l'utilisateur de verrouiller le couvercle 3 relativement à la cuve 2 pour assurer la cuisson des aliments sous pression à l'intérieur de l'enceinte ou pour déverrouiller l'appareil 1 et avoir ainsi accès à l'intérieur de la cuve 2. Le système de verrouillage/déverrouillage pourra être formé par tout dispositif classique bien connu dans le domaine et être par exemple un système à baïonnette (conformément à l'exemple illustré aux figures) ou un système à mâchoire mobile (formé par exemple d'au moins une et de préférence de deux mâchoires de verrouillage montées mobiles radialement sur le couvercle) ou un système à segments mobiles (formé par des pattes radialement mobile dont l'extrémité est destinée à venir se loger dans une cavité ou un orifice ménagé dans la paroi de la cuve 2), ou tout autre système connu (par exemple à étrier).

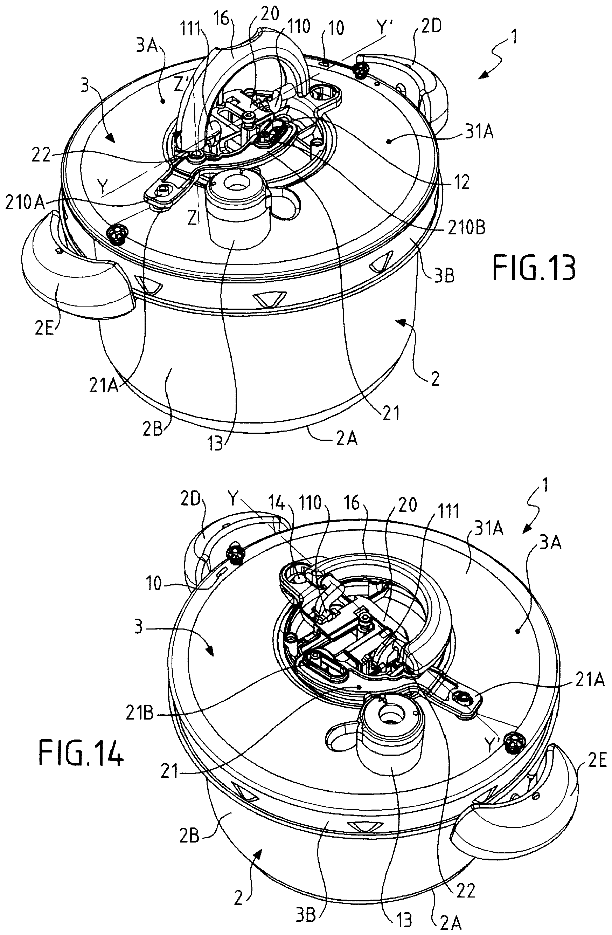

Dans le mode de réalisation illustré aux figures, le système de verrouillage/déverrouillage à baïonnette est conçu pour assurer le verrouillage et le déverrouillage du couvercle 3 relativement à la cuve 2 par pivotement du couvercle 3 relativement à la cuve 2 selon ledit axe vertical central X-X', pour faire ainsi passer l'appareil 1 d'une configuration d'attente de verrouillage (illustrée aux figures 1 et 13), dans laquelle le couvercle 3 est rapporté sur la cuve 2 et repose librement sur cette dernière, à une configuration de verrouillage (illustrée aux figures 2 et 14) dans laquelle la cuve 2 et le couvercle 3 interagissent pour empêcher leur libre séparation, et inversement. Le système de verrouillage à baïonnette mis en oeuvre par le mode de réalisation préférentiel illustré aux figures comprend avantageusement des première et deuxième séries d'excroissances 5A-5J, 6A-6J qui sont solidaires respectivement du couvercle 3 et de la cuve 2 et qui sont conçus, afin d'assurer le verrouillage et le déverrouillage du couvercle 3 relativement la cuve 2, pour venir s'engager, respectivement se dégager, mutuellement par rotation du couvercle 3 relativement à la cuve 2 autour de l'axe vertical central X-X' selon une course angulaire prédéterminée. Comme cela est bien connu en tant que tel, les excroissances 5A-5J, 6A-6J de chacune desdites première et deuxième séries sont destinées à coopérer deux à deux, c'est-à-dire que chaque excroissance de l'une desdites séries est amenée, par rotation du couvercle 3 relativement la cuve 2, à passer sous une excroissance correspondante de l'autre série pour verrouiller le couvercle 3 relativement à la cuve 2. Dans le mode de réalisation illustré aux figures, les excroissances 5A-5J de la première série, solidaire du couvercle 3, font saillie radialement vers l'intérieur du couvercle 3, et sont avantageusement formées par des déformations locales de la jupe annulaire 3B, obtenues par exemple par emboutissage. De préférence, conformément au mode de réalisation illustré aux figures, chacune desdites excroissances 5A-5J de couvercle est formé par un crevé, c'est-à-dire que la déformation radiale localisée de la matière formant l'excroissance s'accompagne de la présence d'une ouverture ménagée à travers l'enveloppe du couvercle 3. L'ouverture en question est avantageusement adjacente à l'excroissance 5A-5J correspondante, et peut être obtenue directement lors de l'emboutissage, par déchirure localisée et contrôlée de la matière formant l'enveloppe sous l'effet de l'opération d'emboutissage, ou au contraire être réalisée préalablement ou postérieurement à l'opération de déformation (par exemple au moyen d'un faisceau laser de découpe ou de tout autre outil de découpe). Le recours à un crevé s'avère particulièrement avantageux car il permet d'obtenir un élément en volume particulièrement rigide et résistant à la flexion, extrêmement simple, rapide et bon marché à fabriquer.

Les excroissances 6A-6J de la deuxième série, solidaire de la cuve 2, font quant à elle avantageusement saillie radialement à partir de la paroi latérale 2B de la cuve 2, vers l'extérieur de cette dernière. L'invention n'est toutefois pas limitée à une configuration particulière des rampes de verrouillage du système à baïonnette, l'essentiel étant que les excroissances de couvercle 5A-5J et de cuve 6A-6J, formant respectivement des rampes de couvercle et de cuve, coopèrent ensemble pour réaliser une liaison mécanique entre la cuve 2 et le couvercle 3 capable de résister à la pression interne régnant dans l'enceinte de cuisson. De préférence, les excroissances 6A-6J de cuve sont formées par le rebord supérieur de la cuve 2, rebord qui déborde vers l'extérieur de façon à former des rampes de cuve séparées par des encoches (figure 3). Ainsi, lorsque le couvercle 3 vient coiffer la cuve 2 dans la position de pré-verrouillage illustrée à la figure 1, les excroissances 5A-5J de couvercle peuvent passer par les encoches pour se retrouver plus bas que le rebord annulaire et donc les rampes de cuve. L'appareil 1 se trouve alors dans sa configuration de pré-verrouillage (ou configuration d'attente de verrouillage), à partir de laquelle la configuration de verrouillage peut être atteinte en faisant simplement tourner le couvercle 3 relativement la cuve 2 selon l'axe vertical X-X', ce qui a pour effet de décaler angulairement les excroissances 5A-5J du couvercle 3 et les encoches ménagées dans le rebord annulaire de la cuve 2, de sorte que les excroissances 5A-5J de couvercle passent sous les excroissances 6A-6J de cuve réalisant ainsi un verrouillage de type « *à baïonnette* ».

L'appareil 1 de cuisson d'aliments sous pression conforme à l'invention comprend avantageusement un moyen de régulation de pression 13, comme par exemple une soupape, montée de préférence sur le couvercle 3, de façon par exemple à être portée directement par ledit couvercle 3 et agencée pour maintenir la pression régnant dans l'enceinte de cuisson à une valeur prédéterminée sensiblement constante, dite pression de fonctionnement, laquelle excède la pression atmosphérique d'une valeur qui est comprise par exemple entre sensiblement 10 et 120 kPa, de préférence de l'ordre de 100 kPa. L'appareil 1 de cuisson d'aliments sous pression comporte avantageusement d'autres organes de fonctionnement, comme par exemple un moyen de sécurité à l'ouverture 14 (du genre doigt de sécurité sensible à la pression) ainsi qu'une soupape de sécurité à la surpression 15 conçue pour dépressuriser l'appareil 1 dès que la pression régnant dans l'enceinte excède une valeur de sécurité prédéterminée.

Comme évoqué précédemment, l'appareil 1 comprend également un joint d'étanchéité 4 interposé entre le couvercle 3 et la cuve 2 pour permettre la montée en pression de l'enceinte de cuisson. Le joint d'étanchéité 4 permet ainsi d'empêcher tout flux incontrôlé de vapeur et/ou d'air entre l'intérieur de l'enceinte et l'extérieur. À cette fin, le joint d'étanchéité 4 est avantageusement réalisé en un matériau élastomère et présente une souplesse naturelle de manière à pouvoir être comprimé entre le couvercle 3 et la cuve 2 pour réaliser l'étanchéité nécessaire. Le joint d'étanchéité 4 présente avantageusement une forme sensiblement annulaire conjuguée à celle du contour périphérique de la paroi supérieure 3A. Plus précisément, le joint d'étanchéité 4 comporte de préférence un talon annulaire périphérique 7 qui est avantageusement logé contre la face intérieure de la jupe annulaire 3B. Avantageusement, le talon 7 présente une section transversale (visible aux figures 8 à 10 et 12) sensiblement constante sur tout le périmètre du joint d'étanchéité 4. En d'autres termes, la forme de la section transversale ne varie sensiblement pas sur toute la longueur du joint, ce qui signifie en particulier que le talon 7 est dépourvu d'irrégularités ou discontinuités géométriques, du genre encoches, qui pourraient localement modifier son comportement mécanique. Cette disposition technique permet de simplifier la fabrication du joint 4.

Comme illustré aux figures, le joint d'étanchéité 4 comporte avantageusement une première lèvre 8 flexible qui s'étend à partir du talon 7, et plus précisément à partir du côté interne dudit talon 7 tourné vers l'intérieur de l'appareil 1, selon une direction d'extension majoritairement radiale centripète, entre une racine 8A solidaire du talon 7, et raccordé à ce dernier de préférence au niveau de son côté intérieur comme illustré aux figures, et une portion extrêmale libre 8B en contact étanche avec ladite paroi supérieure 3A du couvercle 3, et plus précisément avec la face interne de ladite paroi supérieure 3A. La première lèvre 8 forme ainsi une jupe souple qui s'étend à partir du talon 7 en direction de l'axe central X-X'. De préférence, la première lèvre 8 s'étend, à partir du talon 7, selon une incidence oblique vers l'intérieur de l'appareil 1 et vers le haut, de façon à être sollicité en flexion par le poids du couvercle 3 lorsque ce dernier est rapporté sur la cuve 2 (figure 1). De préférence, la première lèvre 8 présente une section transversale (illustrée aux figures 8 à 10 et 12) sensiblement constante sur tout le périmètre du joint d'étanchéité 4. Cela signifie que la première lèvre 8 ne présente pas, elle non plus, d'irrégularités ou discontinuités géométriques (encoche, ouverture...) susceptibles de modifier localement son comportement mécanique. Cette absence de discontinuité est source de simplicité de fabrication et d'utilisation du joint 4, et contribue également à sa fiabilité. Dans le mode de réalisation préférentiel illustré aux figures, le joint d'étanchéité 4 présente avantageusement une forme de révolution autour de l'axe X-X', ce qui le rend particulièrement facile et bon marché à fabriquer. Avantageusement, le joint d'étanchéité 4 comporte une seconde lèvre 9, qui est de préférence elle aussi flexible, et qui s'étend avantageusement elle aussi à partir du talon 7 vers l'intérieur de l'appareil 1, ladite seconde lèvre 9 étant destinée à venir en contact étanche avec la cuve 2. Comme illustré aux figures, la seconde lèvre 9 s'étend avantageusement selon une direction d'extension majoritairement radiale centripète, entre une racine 9A solidaire du talon 7 et une extrémité libre 9B, ladite seconde lèvre 9 définissant une surface d'étanchéité qui vient en appui étanche contre la cuve 2, de préférence contre la surface de repos R, comme illustré aux figures 8 à 10 et 12. Avantageusement, ladite seconde lèvre 9 s'étend, à partir du talon 7, selon une incidence oblique vers l'intérieur de l'appareil 1 et vers le bas, de telle sorte que lesdites première et seconde lèvres 8, 9 s'étendent, à partir du talon 7, de façon sensiblement divergente, selon un profil sensiblement en « *V* ».

Le joint d'étanchéité 4 est avantageusement attaché, de manière amovible, au couvercle 3. À cette fin, le talon 7 du joint d'étanchéité 4 repose préférentiellement sur les protubérances 5A-5J formant les rampes du couvercle (cf. figure 4), de sorte que ces dernières assument une double fonction de maintien du joint d'étanchéité 4 (lorsque le couvercle 3 est séparé de la cuve 2) et de verrouillage (par interaction avec les rampes de cuve 6A-6J). Lorsque le couvercle 3 est rapporté sur la cuve 2, le joint d'étanchéité 4 se retrouve avantageusement interposé entre la surface de repos R et la face intérieure de la paroi supérieure 3A du couvercle 3. Sous l'effet du poids du couvercle 3, les première et seconde lèvres 8, 9 sont pressées l'une en direction de l'autre ce qui permet ainsi d'assurer une étanchéité entre la cuve 2 le couvercle 3. Avantageusement, le joint d'étanchéité 4 est symétrique relativement à un plan horizontal médian qui passe entre les première et deuxième lèvres 8, 9. Grâce à cette caractéristique, le joint peut être disposé sans aucune précaution particulière (l'utilisateur n'a pas à se soucier d'un quelconque sens de positionnement du joint 4) entre le couvercle 3 la cuve 2, ce qui facilite l'utilisation de l'appareil 1 et minimise le risque d'erreur d'utilisation ou de défaut de fonctionnement.

L'invention n'est toutefois pas limitée un joint d'étanchéité à lèvres, et il est par exemple tout à fait envisageable que le joint d'étanchéité 4 ne comporte aucune lèvre et soit formé uniquement par un cordon souple, ou ne comporte qu'une seule première lèvre 8 (auquel cas le talon 7 est par exemple configuré pour venir lui-même en appui contre la surface de repos R afin d'assurer l'étanchéité avec la cuve 2, en lieu et place de la seconde lèvre 9). Le recours à deux lèvres 8, 9 est toutefois préféré car il permet, en particulier, comme évoqué précédemment, de réaliser un joint symétrique par rapport à un plan horizontal médian avec tous les avantages qui en découlent.

L'appareil de cuisson 1 comprend également une ouverture 10 ménagée à travers le couvercle 3, en regard dudit joint d'étanchéité 4. L'ouverture 10 traverse ainsi le couvercle 3 et forme une fenêtre traversante qui est localement en correspondance avec le joint d'étanchéité 4, de façon à être par exemple bouché par ce dernier. L'ouverture 10 peut être ménagée à travers la paroi supérieure 3A du couvercle 3 (comme dans le mode de réalisation illustré aux figures) ou être ménagé à travers la jupe annulaire 3B.

De préférence, ladite ouverture 10 est conçue pour coopérer avec le joint d'étanchéité 4 de manière à assurer avec ce dernier une fonction de sécurité à la surpression. L'ouverture 10 peut par exemple être destinée à former une fenêtre d'extrusion par laquelle le joint est localement repoussé à travers le couvercle 3, ce qui permet de rompre localement l'étanchéité entre le joint 4 et la cuve 2, et/ou entre le joint 4 et le couvercle 3. L'ouverture 10 peut alternativement, conformément au mode de réalisation illustré aux figures, jouer le rôle d'une ouverture de fuite destinée :
- à être obturée par le joint d'étanchéité 4 tant que la pression régnant au sein de l'enceinte est acceptable du point de vue de la sécurité,
- et à être localement découverte par le joint d'étanchéité 4 afin d'assurer une fuite de vapeur en cas de surpression accidentelle.

Dans le mode de réalisation illustré aux figures, où l'ouverture 10 assure une fonction d'ouverture de fuite, l'ouverture 10 est ménagée à travers la paroi supérieure 3A, de sorte que ladite ouverture 10 s'étend avantageusement au-dessus du joint d'étanchéité 4, de façon être obturée hermétiquement par ce dernier tant que la pression régnant au sein de l'enceinte n'excède pas un seuil de sécurité, qui est de préférence supérieure à la valeur prédéterminée de sécurité à laquelle se déclenche la soupape de sécurité 15.

Dans cet exemple de réalisation, l'ouverture 10 traverse ainsi la paroi supérieure 3A selon un axe de perforation sensiblement vertical, c'est-à-dire parallèle à l'axe central X-X'. L'ouverture 10 est avantageusement ménagée en une zone de la paroi supérieure 3A qui est suffisamment proche de la périphérie de cette dernière pour que l'ouverture 10 soit masquée, par l'intérieur, par le joint d'étanchéité 4, et de préférence par la première lèvre 8, comme illustré aux figures 8 à 10 et 12. Ainsi, la face externe de la première lèvre 8 vient localement, et par en dessous, au droit de la fenêtre formée par l'ouverture 10 qui est elle-même ménagée localement à travers la paroi supérieure 3A, de préférence vers la périphérie de cette dernière. Dans le mode de réalisation illustré aux figures, l'ouverture 10 présente avantageusement une forme sensiblement allongée et est disposée de façon à s'étendre longitudinalement selon une direction tangentielle sensiblement perpendiculaire à la direction radiale.

Avantageusement, le joint d'étanchéité 4 est conçu pour se déformer et/ou se déplacer sous l'effet de la pression, lorsque cette dernière excède ledit seuil de sécurité, afin de dégager ainsi au moins en partie l'ouverture 10 et faire chuter la pression dans l'enceinte. Le seuil de sécurité correspond ainsi à une valeur prédéterminée de pression à partir de laquelle la force motrice exercée par la pression régnant au sein de l'enceinte sur la portion du joint d'étanchéité 4 qui obture l'ouverture 10 devient suffisante pour entraîner une déformation locale, et/ou un déplacement local, du joint d'étanchéité 4 adapté(e)(s) pour découvrir l'ouverture 10 et ainsi rompre localement l'étanchéité pour mettre en communication, via l'ouverture 10, l'intérieur de l'enceinte avec l'extérieur.

Préférentiellement, comme illustré aux figures, la jupe annulaire 3B forme une butée d'arrêt pour le joint d'étanchéité 4, et par exemple pour le talon 7, empêchant tout déplacement radial centrifuge du joint 4 au droit de l'ouverture 10. Cela signifie que lorsque, sous l'effet de la montée en pression au sein de l'enceinte, s'exerce sur le joint d'étanchéité 4 une poussée radiale centrifuge, le joint 4 est empêché, par la jupe annulaire 3B contre laquelle le talon 7 vient en appui, de se déplacer librement vers l'extérieur. Dans ce mode de réalisation particulier, la jupe annulaire 3B est dépourvue de toute ouverture d'extrusion de joint ménagée dans le prolongement de l'ouverture 10 ou au voisinage de cette dernière. La jupe annulaire 3B empêche ainsi localement le joint d'étanchéité 4 de subir un déplacement global vers l'extérieur. Grâce à cette caractéristique, l'invention ne souffre pas des différents inconvénients de l'art antérieur liés à la nécessité de faire passer localement le talon du joint à travers une fenêtre d'extrusion ménagée dans le bord tombant du couvercle. Le talon 7 est ici au contraire incapable de passer à travers la jupe annulaire 3B, du moins au voisinage et/ou dans le prolongement de l'ouverture 10. La première lèvre 8 présente toutefois avantageusement une flexibilité adaptée, ou en d'autres termes une flexibilité suffisante, pour que la portion extrêmale libre 8B soit localement repoussé, sous l'effet de la force motrice exercée par la pression régnant sein de l'enceinte, à travers l'ouverture 10 dès que la pression régnant dans l'enceinte excède ledit seuil de sécurité, de façon à faire ainsi communiquer par l'ouverture 10 l'intérieur de l'enceinte avec l'extérieur pour faire chuter la pression dans l'enceinte. Le seuil de sécurité correspond dans ce cas à la valeur prédéterminée de pression à partir de laquelle la force motrice exercée par la pression régnant au sein de l'enceinte sur la portion de la première lèvre 8 obturant l'ouverture 10 devient suffisante pour entraîner une déformation locale de la première lèvre 8 permettant à la portion extrêmale libre 8B de localement pénétrer à travers l'ouverture 10, voire même de traverser localement l'ouverture 10 afin de rompre localement l'étanchéité pour ainsi mettre en communication, via l'ouverture 10, l'intérieur de l'enceinte avec l'extérieur. La première lèvre 8 est donc suffisamment souple, et sa portion extrêmale libre 8B est disposée suffisamment à proximité de l'ouverture 10 (et en l'espèce du bord intérieur de cette dernière) pour que lorsque le seuil de sécurité est dépassé, la portion extrêmale 8B glisse localement le long et contre la face intérieure de la paroi supérieure 3A jusqu'à se retrouver localement au droit de l'ouverture 10 à travers laquelle elle est ensuite localement repoussée par la pression.

L'agencement particulier du joint d'étanchéité 4 relativement à l'ouverture 10, et la flexibilité adaptée de sa première lèvre 8, permet ainsi de libérer l'excès de pression d'une manière particulièrement maîtrisée, sans avoir recours à un déplacement radial du joint au travers d'une fenêtre d'extrusion. L'invention permet ainsi, dans ce mode de réalisation préférentiel, de réduire de manière très significative la dispersion de la valeur du seuil de sécurité. En outre, la vapeur s'échappant par l'ouverture 10 est propulsée sensiblement vers le haut et ne risque donc pas d'éteindre la flamme de la plaque de cuisson ou de provoquer un déplacement de l'appareil 1 par effet de réaction.

De préférence, conformément au mode de réalisation de la figure 12, la première lèvre 8 comprend une portion intermédiaire 80 située entre lesdites racine 8A et portion extrémale libre 8B, l'épaisseur de ladite portion intermédiaire 80 étant inférieure à celle de la portion extrémale libre 8B, de façon à favoriser la flexibilité de la première lèvre 8 et l'aptitude de la portion extrémale libre 8B à être repoussée à travers l'ouverture de fuite 10 dès que la pression régnant dans l'enceinte excède le seuil de sécurité. En d'autres termes, la portion intermédiaire 80 forme une portion amincie qui permet d'obtenir localement une charnière facilitant la flexion locale de la première lèvre 8 et donc le passage de la portion extrémale libre 8B à travers l'ouverture de fuite 10.

Dans les exemples illustrés aux figures, l'appareil 1 comporte une seule et unique ouverture 10. Il est cependant parfaitement envisageable de recourir à plusieurs ouvertures ménagées en différents endroits de la paroi supérieure 3A et/ou de la jupe annulaire 3B. Il est également parfaitement envisageable, sans pour autant que l'on sorte du cadre de l'invention, que l'ouverture 10 ne forme pas une ouverture de fuite comme dans le mode de réalisation préférentiel illustré aux figures, mais constitue plutôt une fenêtre d'extrusion radiale du joint d'étanchéité 4, ménagée par conséquent non pas dans la paroi supérieure 3A mais dans la jupe annulaire 3B afin de permettre au joint 4 de passer localement à travers ladite fenêtre selon une amplitude de déplacement radiale suffisante pour rompre localement l'étanchéité entre le joint d'étanchéité 4 et le couvercle 3 et/ou entre le joint d'étanchéité 4 et la cuve 2. Il est également parfaitement envisageable, sans pour autant que l'on sorte du cadre de l'invention, que l'appareil de cuisson 1 comporte à la fois une ouverture 10 formant l'ouverture de fuite ménagée à travers la paroi supérieure 3A et une fenêtre d'extrusion ménagée à travers la jupe annulaire 3B.

Afin de compenser la possible fragilisation locale du couvercle 3 découlant de la présence de l'ouverture 10, en particulier lorsque cette dernière est ménagée à travers la paroi supérieure 3A, ledit couvercle 3 comprend avantageusement un renfort 11 qui est par exemple aligné radialement avec l'ouverture de fuite 10 et est disposé entre le centre du couvercle 3 (par lequel passe l'axe central X-X') et ladite ouverture de fuite 10. De préférence, le renfort 11 est formé par une zone déformée localement du couvercle 3, et de façon encore plus préférentielle par une zone emboutie du couvercle 3. Dans le mode de réalisation illustré aux figures, ladite zone emboutie est disposée au voisinage de l'ouverture de fuite 10, et se présente sous la forme d'une déformation locale de la paroi supérieure 3A en direction de l'intérieur de l'appareil 1.

De préférence, ladite zone emboutie est sensiblement allongée et s'étend sensiblement parallèlement à l'ouverture de fuite 10, selon une longueur qui est de préférence supérieure à celle de l'ouverture de fuite 10.

Comme illustré aux figures, l'appareil de cuisson 1 comprend également un élément de couverture 12, lesdits couvercle 3 et élément de couverture 12 étant montés mobiles l'un relativement à l'autre pour évoluer entre une première configuration dans laquelle l'élément de couverture 12 coiffe, au moins en partie et de préférence totalement, ladite ouverture 10 (cf. figures 2 et 7) et une deuxième configuration dans laquelle l'élément de couverture 12 découvre, au moins en partie et de préférence totalement, ladite ouverture 10, de sorte que cette dernière n'est sensiblement plus recouverte par l'élément de couverture 12. La première configuration correspond ainsi à une configuration de masquage de l'ouverture 10 par l'élément de couverture 12 qui recouvre ladite ouverture 10, tandis que la deuxième configuration correspond à une configuration d'exposition de l'ouverture 10 qui n'est alors plus recouverte par l'élément de couverture 12.

Grâce à cette caractéristique technique, l'autocuiseur 1 peut évoluer entre un état sécuritaire, dans laquelle l'ouverture 10 est recouverte par l'élément de couverture 12, ce dernier formant ainsi un bouclier empêchant un éventuel jet de vapeur issu de l'ouverture 10 d'atteindre directement un utilisateur, et un état de repos, dans lequel l'ouverture 10 est cette fois accessible depuis l'extérieur, et en l'espèce directement accessible à l'utilisateur qui peut par exemple immédiatement et aisément en contrôler (par exemple visuellement) l'état fonctionnel et procéder à son nettoyage ou à sa désobstruction le cas échéant. En d'autres termes, dans la deuxième configuration l'ouverture 10 est exposée à l'extérieur, ce qui la rend en particulier visible et accessible depuis l'extérieur de l'appareil 1. Dans l'exemple illustré aux figures, l'ouverture 10 débouche à l'extérieur (en l'espèce directement) dans la deuxième configuration, et n'est plus recouverte par un quelconque élément susceptible d'assurer une fonction de masquage et/ou de bouclier.

L'invention s'avère particulièrement utile dans le cas où l'ouverture 10 est une ouverture de fuite ménagée à travers la paroi supérieure 3A, selon un axe vertical, de sorte que le jet de vapeur susceptible de s'échapper par ladite ouverture 10 est dirigé vers le haut et pourrait donc potentiellement atteindre directement un utilisateur en l'absence de l'élément de couverture 12. Afin d'assurer cette fonction de bouclier pare-vapeur, l'élément de couverture 12 est avantageusement plein, c'est-à-dire qu'il est sensiblement non ajouré pour former une barrière qu'un jet de vapeur d'eau ne peut pas traverser.

Avantageusement, et comme cela ressort notamment des figures 1, 2, 6 et 7, l'élément de couverture 12 recouvre de manière permanente une partie du couvercle 3, et se présente par exemple sous la forme d'un capot en matière plastique disposé sur le couvercle 3, de manière à surplomber localement la face extérieure 31A de la paroi supérieure 3A. Dans la première configuration, la zone du couvercle 3 surplombée par l'élément de couverture 12 contient l'ouverture 10, tandis que dans la deuxième configuration la zone du couvercle 3 surplombée localement par l'élément de couverture 12 ne contient pas l'ouverture 10, ou du moins n'en contient qu'une fraction, et de préférence une fraction minoritaire.

De préférence, l'élément de couverture 12 et le couvercle 3 sont attachés ensemble avec une faculté de déplacement relatif, de sorte qu'ils forment ainsi un sous-ensemble unitaire (illustré séparément à la figure 4). Il est cependant parfaitement envisageable, sans pour autant que l'on sorte du cadre de l'invention, que l'élément de couverture 12 fasse partie, ou soit solidaire, de la cuve 2 et/ou de l'une et/ou l'autre des poignées de cuve 2D, 2E. En outre, l'élément de couverture 12 est bien entendu conformé pour tenir compte des dimensions et du positionnement de l'ouverture 10. Par exemple, si cette dernière est ménagée dans la jupe annulaire 3B, alors l'élément de couverture 12 est agencé pour pouvoir venir coiffer latéralement l'ouverture 10, c'est-à-dire recouvrir ladite ouverture 10 par l'extérieur de sorte à former un écran, ou un bouclier, entre l'ouverture 10 et l'environnement extérieur, dans l'axe de ladite ouverture 10.

Avantageusement, lesdits couvercle 3 et élément de couverture 12 sont montés mobiles à rotation l'un par rapport à l'autre, de préférence selon l'axe central X-X', de sorte que dans la première configuration précitée, l'élément de couverture 12 coiffe une première région Z1 du couvercle 3 qui contient ladite ouverture 10, tandis que dans la seconde configuration l'élément de couverture 12 coiffe une seconde région Z2 du couvercle 3 qui ne contient pas ladite ouverture 10, de sorte que cette dernière est dégagée et directement et immédiatement accessible.

Plus précisément, dans le mode de réalisation illustré aux figures, lesdits couvercle 3 et élément de couverture 12 sont montés uniquement à pivotement l'un par rapport à l'autre, c'est-à-dire que le seul mouvement relatif possible entre ces deux pièces est une rotation, et plus particulièrement une rotation pure (pas de mouvement de translation relatif). Avantageusement, et comme illustré aux figures, les éléments assurant le verrouillage du couvercle 3 par rapport à la cuve 2 (par exemple les rampes de cuve et de couvercle lorsqu'est mis en oeuvre un système de verrouillage à baïonnette) sont distinct et indépendant de l'élément de couverture 12, et ne sont en particulier pas embarqués ou portés par ce dernier, mais sont au contraire mobiles relativement à ce dernier.

De préférence, lesdits couvercle 3 et élément de couverture 12 se trouvent dans leur première configuration lorsque le couvercle 3 est verrouillé relativement à la cuve 2, et se trouvent dans leur deuxième configuration lorsque le couvercle 3 est déverrouillé relativement à la cuve 2. Le passage de la première à la deuxième configuration, et inversement, peut être commandé manuellement par l'utilisateur, et de préférence concomitamment au verrouillage/déverrouillage du couvercle 3 relativement à la cuve 2, par exemple au moyen d'un organe de commande unique et commun.

De préférence, l'appareil de cuisson 1 comprend un organe de commande manuelle 16 du verrouillage/déverrouillage du couvercle 3 relativement à la cuve 2, ledit organe de commande manuelle 16 étant mobile, et par exemple monté mobile relativement au couvercle 3, entre une position de verrouillage (qui est par exemple une position rabattue, comme illustré aux figures 2, 7 et 14) et une position de déverrouillage (qui est par exemple une position relevée, comme illustré aux figures 1, 6 et 13). Par exemple, l'organe de commande manuelle 16 est formé par une poignée rotative selon un axe de pivotement radial Y-Y' et qui présente par exemple une forme de d'anse pour permettre à l'utilisateur d'assurer par son entremise à la fois la commande du verrouillage/déverrouillage et la préhension du sous-ensemble de couvercle illustré à la figure 4.

L'organe de commande manuelle 16 du verrouillage/déverrouillage est avantageusement relié auxdits couvercle 3 et élément de couverture 12 par un dispositif de transformation de mouvement (visible aux figures 13 et 14) conçu pour transformer le déplacement de l'organe de commande manuelle 16 (qui est par exemple un pivotement selon une course angulaire d'environ 90° autour de l'axe Y-Y') entre ses positions de verrouillage et déverrouillage, en déplacement relatif (par exemple un pivotement selon l'axe vertical central X-X') du couvercle 3 et de l'élément de couverture 12 entre lesdites première et deuxième configurations. Bien entendu, le dispositif de transformation de mouvement précité est adapté à la nature du déplacement relatif de l'organe de commande manuelle 16, du couvercle 3 et de l'élément de couverture 12, et pourra mettre en oeuvre tout composant d'entraînement (roue dentée, came, levier, biellette, *etc.*) requis.

Avantageusement, ledit dispositif de transformation de mouvement est conçu pour que, lorsque l'organe de commande manuel 16 occupe sa position de verrouillage (illustré aux figures 2, 7 et 14), le couvercle 3 et l'élément de couverture 12 se trouvent dans ladite première configuration, et pour que lorsque l'organe de commande manuelle 16 occupe sa position de déverrouillage, le couvercle 3 et l'élément de couverture 12 se trouvent dans ladite deuxième configuration.

Dans le mode de réalisation illustré aux figures, où l'appareil de cuisson 1 comprend un système de verrouillage à baïonnette, l'élément de couverture 12 est avantageusement attaché au couvercle 3 de façon que ce dernier puisse pivoter relativement à l'élément de couverture 12, l'élément couverture 12 et la cuve 2 étant conçus pour être réunis selon au moins un agencement relatif prédéterminé (illustré aux figures 1 et 13) permettant audit système de verrouillage à baïonnette de verrouiller le couvercle 3 et la cuve 2 par pivotement du couvercle 3 relativement à l'élément de couverture 12. Dans ce mode de réalisation avantageux, l'élément de couverture 12, outre sa fonction de masquage/exposition de l'ouverture 10, assure également une fonction de verrouillage angulaire consistant, par interaction (directe ou indirecte) de l'élément de couverture 12 et de la cuve 2, à sensiblement empêcher l'élément de couverture 12 de pivoter relativement à la cuve 2 selon l'axe vertical central X-X' lors du déplacement manuel de l'organe de commande 16 entre ses positions de verrouillage et de déverrouillage. Cette fonction de verrouillage angulaire relatif de l'élément de couverture 12 et de la cuve 2 permet à l'élément de couverture 12 de jouer le rôle d'un bâti fixe immobile relativement à la cuve 2 et par rapport auquel le couvercle 3 peut pivoter autour de l'axe vertical central X-X' selon une course angulaire prédéterminée pour passer d'un état déverrouillé (illustré à la figure 1) à un état verrouillé (illustré la figure 2). À cette fin, l'élément de couverture 12 forme par exemple un habillage qui recouvre de préférence en partie le couvercle 3, et de préférence qui recouvre une bande centrale (diamétrale) de ce dernier. Avantageusement, ledit habillage déborde radialement du couvercle 3 pour interagir mécaniquement, lorsque l'élément de couverture 12 et la cuve 2 sont réunis selon ledit agencement relatif prédéterminé (illustré aux figures 1 et 13), avec un élément complémentaire 20D solidaire de la cuve 2, et éventuellement issue de cette dernière, pour verrouiller le positionnement angulaire relatif de l'élément de couverture 12 et de la cuve 2 dans un plan horizontal. Par exemple, l'élément de couverture 12 est formé par une traverse qui s'étend sur le couvercle 3 entre deux extrémités diamétralement opposées qui débordent radialement du couvercle 3 et se terminent chacune par un bord tombant 12A équipé d'une encoche 12B destinée à coopérer avec des tétons complémentaire 20D, 20E respectivement issus des poignées de cuve 2D, 2E. L'invention n'est cependant absolument pas limitée à ce mode de réalisation particulier, et il est parfaitement envisageable de recourir alternativement à tout autre mode de verrouillage angulaire entre l'élément de couverture 12 et la cuve 2.

Avantageusement, le dispositif de transformation comprend un mécanisme démultiplicateur conçu pour entraîner le couvercle 3 en rotation autour de l'axe vertical central X-X', selon une course présentant une première amplitude angulaire prédéterminée, en réponse à une rotation dudit organe de commande 16 autour dudit axe radial Y-Y' selon une course présentant une seconde amplitude angulaire prédéterminée supérieure à ladite première amplitude angulaire prédéterminée.

Conformément au mode de réalisation illustré aux figures, le dispositif de transformation comprend par exemple une pièce de transmission 20 montée mobile en translation dans un plan horizontal perpendiculaire à l'axe vertical central X-X' relativement à l'élément de couverture 12. Dans ce mode de réalisation, le dispositif de transformation comprend un mécanisme de transformation du mouvement de pivotement de l'organe de commande 16 relativement à l'élément de couverture 12 en mouvement de translation de la pièce de transmission 20 relativement audit élément de couverture 12.

Par exemple, le mécanisme de transformation en question est formé par une came 110, 111 solidaire de l'organe de commande 16, ladite came 110, 111 étant pourvue d'un pion qui est reçu dans un logement correspondant ménagé dans la pièce de transmission 20, de façon que le pivotement de l'organe de commande 16 entraîne le pivotement concomitant de la came 110, 111, laquelle repousse alors la pièce de transmission 20 dans le plan horizontal perpendiculaire à l'axe vertical central X-X'. L'invention n'est cependant absolument pas limitée à un mécanisme de transformation de mouvement à came, il est parfaitement envisageable de recourir à tout autre mécanisme de transformation de mouvement connu (par exemple : mécanisme à engrenage reposant sur la coopération d'un secteur de couronne dentée solidaire de l'organe de commande 16 et d'une crémaillère rectiligne solidaire de la pièce transmission 20, ou système à biellette, ou à vis sans fin, ou à engrenage de roues dentées...). Avantageusement, le dispositif de transformation comprend également, conformément au mode de réalisation préférentiel illustré aux figures, au moins un levier horizontal 21 monté à pivotement relativement à l'élément de couverture 12 selon un axe vertical excentré Z-Z' qui est fixe par rapport audit élément de couverture 12, parallèle audit axe vertical central X-X' et situé à une distance prédéterminée de ce dernier. De préférence, comme illustré aux figures, ledit levier horizontal 21 s'étend longitudinalement entre une première extrémité 21A articulée au couvercle 3 et une deuxième extrémité 21B articulée à la pièce de transmission 20, laquelle fait partie du dispositif de transformation. De préférence, le levier horizontal 21 est pourvu d'un logement (formé par exemple par un orifice traversant) destiné à accueillir un axe 22 solidaire de l'élément de couverture 12, de façon à réaliser une liaison pivot d'axe Z-Z' entre le levier horizontal 21 et l'élément de couverture 12. L'articulation de la première extrémité 21A relativement au couvercle 3 est par exemple réalisée au moyen d'un premier goujon 210A solidaire du couvercle 3 (par exemple soudé sur la face externe 31A du couvercle 3). Le dispositif de transformation comporte également avantageusement un deuxième goujon 210B solidaire de la pièce de transmission 20 et embarqué sur cette dernière. Le levier horizontal 21 présente avantageusement une forme globale de faucille, avec un bras sensiblement rectiligne qui s'étend à partir de la première extrémité 21A jusqu'au point de rotation traversé par l'axe vertical excentré Z-Z', pour ensuite se prolonger par une portion arquée jusqu'à la deuxième extrémité 21B. Le déplacement en translation rectiligne de la pièce de transmission 20 dans le plan horizontal est converti en rotation du levier 21 autour de l'axe vertical excentré Z-Z', rotation qui est elle-même convertie en une rotation du couvercle 3 relativement à l'élément de couverture 12 selon l'axe vertical central X-X'. L'invention n'est cependant absolument pas limitée à un tel mécanisme de transformation de mouvement, et il est par exemple parfaitement envisageable de mettre en oeuvre, en lieu et place d'un système à levier comme illustré, un système à biellette, à came ou à engrenage, ou tout autre système connu, sans pour autant que l'on sorte du cadre de l'invention. Il est également parfaitement envisageable de mettre en oeuvre, en lieu et place d'un organe de commande 16 pivotant, un organe de commande 16 coulissant qui se présente par exemple sous la forme d'un bouton-poussoir solidaire de la pièce de transmission 20, de sorte qu'il suffit dans ce cas de pousser sur le bouton en question pour faire coulisser radialement la pièce de transmission 20 et provoquer ainsi le pivotement du couvercle 3 relativement à l'élément de couverture 12 par l'intermédiaire du levier horizontal 21 par exemple.

Le fonctionnement de l'autocuiseur 1 conforme au mode de réalisation illustré aux figures est le suivant. L'utilisateur positionne tout d'abord le sous-ensemble de couvercle (illustré à la figure 4) sur la cuve 2, de telle sorte que le couvercle 3 coiffe ladite cuve 2. À cet instant, l'autocuiseur 1 se trouve dans une configuration de pré-verrouillage illustré à la figure 1, dans laquelle l'habillage formé par l'élément de couverture 12 est verrouillé en rotation dans le plan horizontal relativement à la cuve 2 (par coopération de l'encoche 12B avec le téton complémentaire 20D). Dans cette configuration, les rampes de couvercle 5A-5J se retrouvent plus bas que les rampes de cuve 6A-6J et décalées angulairement par rapport à ces dernières. Une fois l'autocuiseur 1 dans cette configuration d'attente de verrouillage, qui correspond à la deuxième configuration selon laquelle l'élément de couverture 12 découvre ladite ouverture 10 (figure 1), l'utilisateur rabat l'anse formant l'organe de commande manuelle 16, selon par exemple une course angulaire d'environ 90°, jusqu'à atteindre une position rabattue de butée illustrée notamment aux figures 2 et 14. Ce déplacement manuel de l'organe de commande 16 de sa position déployée à sa position rabattue entraîne concomitamment le pivotement du couvercle 3 relativement à l'élément de couverture 12 (par exemple selon une course angulaire d'environ 15°) permettant ainsi :
- aux rampes de couvercle 5A-5J de venir en correspondance sous les rampes de cuve 6A-6J selon une configuration de verrouillage permettant la montée en pression,
- et à la région Z1 du couvercle 3 contenant l'ouverture 10 de se retrouver sous l'élément de couverture 12, lequel forme alors une barrière pare-vapeur empêchant toute projection directe de vapeur vers l'extérieur, dans l'hypothèse où l'étanchéité serait rompue (par exemple selon le mécanisme sécuritaire de déformation de la première lèvre 8 illustré aux figures 8 à 10) en cas de suppression accidentelle.

L'invention permet ainsi de bénéficier d'un excellent niveau de sécurité tout en permettant une maintenance et un nettoyage aisé de l'élément de sécurité ultime formé par l'ouverture 10.

## Revendications

1. Appareil de cuisson (1) d'aliments sous pression comprenant :
- une cuve (2) et un couvercle (3) destiné à former avec ladite cuve (2) une enceinte de cuisson,
- un joint d'étanchéité (4) interposé entre le couvercle (3) et la cuve (2) pour permettre la montée en pression de l'enceinte de cuisson,
- une ouverture (10) ménagée à travers le couvercle (3) en regard dudit joint d'étanchéité (4),
**caractérisé en ce qu'**il comprend également un élément de couverture (12), lesdits couvercle (3) et élément de couverture (12) étant montés mobiles l'un relativement à l'autre pour évoluer entre une première configuration dans laquelle l'élément de couverture (12) coiffe ladite ouverture (10) pour la masquer et une deuxième configuration dans laquelle l'élément de couverture (12) découvre ladite ouverture (10), cette dernière étant ainsi accessible depuis l'extérieur.

2. Appareil de cuisson (1) selon la revendication 1 **caractérisé en ce que** ledit couvercle (3) comprend une paroi supérieure (3A) à travers laquelle est ménagée ladite ouverture (10), de sorte que cette dernière s'étend au-dessus du joint d'étanchéité (4) de façon à être obturée hermétiquement par ce dernier tant que la pression régnant au sein de l'enceinte n'excède pas un seuil de sécurité, ledit joint (4) étant conçu pour se déformer et/ou se déplacer sous l'effet de la pression lorsque cette dernière excède ledit seuil de sécurité, afin de dégager ainsi au moins en partie l'ouverture (10) et faire chuter la pression dans l'enceinte.

3. Appareil de cuisson (1) selon la revendication 2 **caractérisé en ce que** ledit joint d'étanchéité (4) comporte un talon (7) annulaire périphérique ainsi qu'une première lèvre (8) flexible qui s'étend à partir dudit talon (7) vers l'intérieur de l'appareil (1), selon une direction d'extension majoritairement radiale centripète, entre une racine (8A) solidaire du talon (7) et une portion extrémale libre (8B) en contact étanche avec ladite paroi supérieure (3A) du couvercle.

4. Appareil de cuisson (1) selon la revendication 3 **caractérisé en ce que** ladite paroi supérieure (3A) présente un contour périphérique sensiblement circulaire ou ovale à partir duquel s'étend une jupe annulaire (3B), ladite jupe annulaire (3B) formant une butée d'arrêt pour le talon (7) empêchant tout déplacement radial centrifuge du joint (4) au droit de l'ouverture (10), ladite première lèvre (8) présentant une flexibilité suffisante pour que la portion extrémale libre (8B) soit localement repoussée à travers l'ouverture (10) dès que la pression régnant dans l'enceinte excède ledit seuil de sécurité, de façon à faire ainsi communiquer par l'ouverture (10) l'intérieur de l'enceinte avec l'extérieur pour faire chuter la pression dans l'enceinte.

5. Appareil de cuisson (1) selon l'une des revendications 1 à 4 **caractérisé en ce que** ladite ouverture (10) présente une forme sensiblement allongée et est disposée de façon à s'étendre longitudinalement selon une direction tangentielle sensiblement perpendiculaire à la direction radiale.

6. Appareil de cuisson (1) selon l'une des revendications 1 à 5 **caractérisé en ce que** ledit couvercle comprend un renfort (11) qui est aligné radialement avec l'ouverture (10) et est disposé entre le centre du couvercle (3) et ladite ouverture (10), ledit renfort (11) étant de préférence formé par une zone emboutie du couvercle (3).

7. Appareil de cuisson (1) selon l'une des revendications précédentes **caractérisé en ce que** lesdits couvercle (3) et élément de couverture (12) sont montés mobiles à rotation l'un par rapport à l'autre, de sorte que dans la première configuration l'élément de couverture (12) coiffe une première région (21) du couvercle (3) qui contient ladite ouverture (10), tandis que dans la seconde configuration l'élément de couverture (12) coiffe une seconde région (22) du couvercle (3) qui ne contient pas ladite ouverture (10), de sorte que cette dernière est dégagée.

8. Appareil de cuisson (1) selon l'une des revendications précédentes **caractérisé en ce qu'**il comprend un système de verrouillage/déverrouillage du couvercle (3) relativement à la cuve (2), ledit système de verrouillage/déverrouillage étant un système à baïonnette, ou un système à mâchoires mobiles, ou un système à segments mobiles.

9. Appareil de cuisson (1) selon l'une des revendications précédentes **caractérisé en ce qu'**il comprend un organe de commande manuelle (16) du verrouillage/déverrouillage du couvercle (3) relativement à la cuve (2), ledit organe de commande manuelle (16) étant mobile entre une position de verrouillage et une position de déverrouillage et étant relié auxdits couvercle (3) et élément de couverture (12) par un dispositif de transformation de mouvement conçu pour transformer le déplacement de l'organe de commande manuelle entre ses positions de verrouillage et déverrouillage en déplacement relatif du couvercle (3) et de l'élément de couverture (12) entre lesdites première et deuxième configurations.

10. Appareil de cuisson (1) selon la revendication 9 **caractérisé en ce que** ledit dispositif de transformation de mouvement est conçu pour que lorsque l'organe de commande manuelle (16) occupe sa position de verrouillage, le couvercle (3) et l'élément de couverture (12) se trouvent dans ladite première configuration, et pour que lorsque l'organe de commande manuelle (16) occupe sa position de déverrouillage, le couvercle (3) et l'élément de couverture (12) se trouvent dans ladite deuxième configuration.

11. Appareil de cuisson (1) selon l'une des revendications précédentes **caractérisé en ce qu'**il comprend un système de verrouillage à baïonnette, ledit élément de couverture (12) étant attaché audit couvercle (3) de façon que ce dernier puisse pivoter relativement audit élément de couverture (12), l'élément de couverture (12) et la cuve (2) étant conçus pour être réunis selon au moins un agencement relatif prédéterminé permettant audit système de verrouillage à baïonnette de verrouiller le couvercle (3) à la cuve (2) par pivotement du couvercle (3) relativement à l'élément de couverture (12).

12. Appareil de cuisson (1) selon la revendication 11 **caractérisé en ce que** ledit élément de couverture (12) forme un habillage qui déborde radialement du couvercle (3) pour interagir mécaniquement, lorsque l'élément de couverture (12) et la cuve (2) sont réunis selon ledit agencement relatif prédéterminé, avec un élément complémentaire solidaire de la cuve (2), pour verrouiller le positionnement angulaire relatif de l'élément de couverture (12) et de la cuve (2) dans un plan horizontal.

## Patentansprüche

1. Druckkochgerät (1) zum Zubereiten von Nahrungsmitteln, umfassend:
- einen Behälter (2) und einen Deckel (3), der dazu bestimmt ist, mit dem Behälter (2) einen Kochbehältnis zu bilden,
- eine Dichtung (4), die zwischen dem Deckel (3) und dem Behälter (2) angeordnet ist, um den Druckaufbau des Kochbehälters zu ermöglichen,
- eine Öffnung (10), die durch den Deckel (3) gegenüber der Dichtung (4) ausgebildet ist,
**dadurch gekennzeichnet, dass** es ebenfalls ein Abdeckelement (12) aufweist, wobei der Deckel (3) und das Abdeckelement (12) zueinander beweglich befestigt sind, um sich zwischen einer ersten Konfiguration, in der das Abdeckelement (12) die Öffnung (10) bedeckt, um sie zu verdecken, und einer zweiten Konfiguration zu bewegen, in der das Abdeckelement (12) die Öffnung (10) aufdeckt, wobei diese Letztere auf diese Weise von außen zugänglich ist.

2. Kochgerät (1) nach Anspruch 1, **dadurch gekennzeichnet, dass** der Deckel (3) eine obere Wand (3A) aufweist, durch die die Öffnung (10) derart ausgebildet ist, dass sich diese Letztere über der Dichtung (4) derart erstreckt, um von dieser Letzteren hermetisch verschlossen zu werden, solange der Druck, der im Inneren des Behälters herrscht, eine Sicherheitsschwelle nicht überschreitet, wobei die Dichtung (4) ausgebildet ist, um sich unter der Einwirkung des Drucks zu verformen und/oder zu bewegen, wenn dieser Letztere die Sicherheitsschwelle überschreitet, um dadurch mindestens teilweise die Öffnung (10) freizugeben und den Druck in dem Behälter abfallen zu lassen.

3. Kochgerät (1) nach Anspruch 2, **dadurch gekennzeichnet, dass** die Dichtung (4) einen peripheren ringförmigen Wulst (7) und eine erste flexible Lippe (8) aufweist, die sich ausgehend von dem Wulst (7) in Richtung des Inneren des Gerätes (1) in einer vorwiegend radialen, zentripetalen Ausdehnungsrichtung zwischen einer Wurzel (8A), die mit dem Wulst (7) fest verbunden ist, und einem freien Endabschnitt (8B) erstreckt, der in dichtendem Kontakt mit der oberen Wand (3A) des Deckels ist.

4. Kochgerät (1) nach Anspruch 3, **dadurch gekennzeichnet, dass** die obere Wand (3A) eine Umfangskontur aufweist, die im Wesentlichen kreisförmig oder oval ist, von der aus sich eine ringförmige Schürze (3B) erstreckt, wobei die ringförmige Schürze (3B) einen Endanschlag für den Wulst (7) bildet, der jede radiale zentrifugale Verschiebung der Dichtung (4) im rechten Winkel zu der Öffnung (10) verhindert, wobei die erste Lippe (8) eine ausreichende Flexibilität aufweist, damit der freie Endabschnitt (8B) lokal durch die Öffnung (10) geschoben wird, sobald der Druck, der in dem Behälter herrscht, die Sicherheitsschwelle überschreitet, derart, um auf diese Weise das Innere des Behälters durch die Öffnung (10) mit dem Äußeren in Verbindung zu bringen, um den Druck in dem Behälter abfallen zu lassen.

5. Kochgerät (1) nach einem der Ansprüche 1 bis 4, **dadurch gekennzeichnet, dass** die Öffnung (10) eine im Wesentlichen längliche Form aufweist und derart angeordnet ist, um sich in der Längsrichtung in tangentialer Richtung zu erstrecken, die im Wesentlichen senkrecht zu der radialen Richtung ist.

6. Kochgerät (1) nach einem der Ansprüche 1 bis 5, **dadurch gekennzeichnet, dass** der Deckel eine Verstärkung (11) aufweist, die radial mit der Öffnung (10) ausgerichtet ist und zwischen der Mitte des Deckels (3) und der Öffnung (10) angeordnet ist, wobei die Verstärkung (11) vorzugsweise durch eine vertiefte Zone des Deckels (3) gebildet ist.

7. Kochgerät (1) nach einem der vorhergehenden Ansprüche, **dadurch gekennzeichnet, dass** der Deckel (3) und das Abdeckelement (12) drehbeweglich derart zueinander befestigt sind, so dass das Abdeckelement (12) in der ersten Konfiguration einen ersten Bereich (21) des Deckels (3) bedeckt, der die Öffnung (10) enthält, während das Abdeckelement (12) in der zweiten Konfiguration einen zweiten Bereich (22) des Deckels (3) bedeckt, der die Öffnung (10) nicht enthält, derart, so dass diese Letztere freigegeben ist.

8. Kochgerät (1) nach einem der vorhergehenden Ansprüche, **dadurch gekennzeichnet, dass** es ein Verriegelungs-/Entriegelungssystem des Deckels (3) in Bezug auf den Behälter (2) aufweist, wobei das Verriegelungs-/Entriegelungssystem ein Bajonett-System oder ein System mit beweglichen Spannbacken oder ein System mit beweglichen Segmenten ist.

9. Kochgerät (1) nach einem der vorhergehenden Ansprüche, **dadurch gekennzeichnet, dass** es ein Organ zum manuellen Steuern (16) des Verriegelns/Entriegelns des Deckels (3) in Bezug auf den Behälter (2) aufweist, wobei das Organ zum manuellen Steuern (16) zwischen einer Verriegelungsposition und einer Entriegelungsposition beweglich ist und mit dem Deckel (3) und dem Abdeckelement (12) durch eine Bewegungsumwandlungsvorrichtung verbunden ist, die ausgebildet ist, um die Bewegung des Organs zum manuellen Steuern zwischen seiner Verriegelungs- und Entriegelungsposition in eine relative Bewegung des Deckels (3) und des Abdeckelements (12) zwischen der ersten und zweiten Konfiguration umzuwandeln.

10. Kochgerät (1) nach Anspruch 9, **dadurch gekennzeichnet, dass** die Bewegungsumwandlungsvorrichtung ausgebildet ist, damit sich, wenn das Organ zum manuellen Steuern (16) seine Verriegelungsposition einnimmt, der Deckel (3) und das Abdeckelement (12) in der ersten Konfiguration befinden, und damit sich, wenn das Organ zum manuellen Steuern (16) seine Entriegelungsposition einnimmt, der Deckel (3) und das Abdeckelement (12) in der zweiten Konfiguration befinden.

11. Kochgerät (1) nach einem der vorhergehenden Ansprüche, **dadurch gekennzeichnet, dass** es ein Bajonett-Verriegelungssystem aufweist, wobei das Abdeckelement (12) derart an dem Deckel (3) befestigt ist, so dass dieser Letztere in Bezug auf das Abdeckelement (12) verschwenkbar ist, wobei das Abdeckelement (12) und der Behälter (2) ausgelegt sind, um in mindestens einer vorbestimmten relativen Anordnung verbunden zu werden, die dem Bajonett-Verriegelungssystem ermöglicht, den Deckel (3) an dem Behälter (2) durch Schwenken des Deckels (3) relativ zu dem Abdeckelement (12) zu verriegeln.

12. Kochgerät (1) nach Anspruch 11, **dadurch gekennzeichnet, dass** das Abdeckelement (12) eine Abdeckung bildet, die radial von dem Deckel (3) vorsteht, um, wenn das Abdeckelement (12) und der Behälter (2) in der vorbestimmten relativen Anordnung verbunden sind, mit einem komplementären Element, das mit dem Behälter (2) fest verbunden ist, mechanisch zu interagieren, um die relative Winkelposition des Abdeckelements (12) und des Behälters (2) in einer horizontalen Ebene zu verriegeln.

## Claims

1. Appliance (1) for cooking food under pressure, comprising:
- a vessel (2) and a lid (3) intended to form, with said vessel (2), a cooking chamber,
- a seal (4) interposed between the lid (3) and the vessel (2) to enable the cooking chamber to rise in pressure,
- an opening (10) provided through the lid (3) opposite said seal (4),
**characterised in that** it also comprises a covering element (12), said lid (3) and covering element (12) being mounted so as to be able to move in relation to one another in order to change between a first configuration in which the covering element (12) covers said opening (10) in order to mask it and a second configuration in which the covering element (12) uncovers said opening (10), the latter thus being accessible from the outside.

2. Cooking appliance (1) according to claim 1, **characterised in that** said lid (3) comprises a top wall (3A) through which said opening (10) is provided, so that the latter extends above the seal (4) so as to be dosed off hermetically by the latter as long as the pressure prevailing in the chamber does not exceed a safety threshold, said seal (4) being designed so as to deform and/or to move under the effect of the pressure when the latter exceeds said safety threshold, in order thus to at least partly leave clear the opening (10) and to cause the pressure in the chamber to drop.

3. Cooking appliance (1) according to claim 2, **characterised in that** said seal (4) comprises a peripheral annular heel (7) and a first flexible lip (8) that extends from said heel (7) towards the inside of the appliance (1), in a mainly centripetal radial extension direction, between a root (8A) integral with the heel (7) and a free end portion (8B) in sealed contact with said top wall (3A) of the lid.

4. Cooking appliance (1) according to claim 3, **characterised in that** said top wall (3A) has a substantially circular or oval peripheral contour from which an annular skirt (3B) extends, said annular skirt (3B) forming a stop for the heel (7) preventing any centrifugal radial movement of the seal (4) in line with the opening (10), said first lip (8) having sufficient flexibility so that the free end portion (8B) is locally pushed through the opening (10) as soon as the pressure prevailing in the chamber exceeds said safety threshold, so as thus to make the inside of the chamber communicate, through the opening (10), with the outside in order to cause the pressure in the chamber to drop.

5. Cooking appliance (1) according to any of claims 1 to 4, **characterised in that** said opening (10) has a substantially elongate form and is disposed so as to extend longitudinally in a tangential direction substantially perpendicular to the radial direction.

6. Cooking appliance (1) according to any of claims 1 to 5, **characterised in that** said lid comprises a reinforcement (11) that is aligned radially with the opening (10) and is disposed between the centre of the lid (3) and said opening (10), said reinforcement (11) preferably being formed by a pressed zone of the lid (3).

7. Cooking appliance (1) according to any of the preceding claims, **characterised in that** said lid (3) and covering element (12) are mounted so as to be able to rotate with respect to one another, so that, in the first configuration, the covering element (12) covers a first region (21) of the lid (3) that contains said opening (10), while in the second configuration the covering element (3) covers a second region (22) of the lid (3) that does not contain said opening (10), so that the latter is left clear.

8. Cooking appliance (1) according to any of the preceding claims, **characterised in that** it comprises a system for locking/unlocking the lid (3) in relation to the vessel (2), said locking/unlocking system being a bayonet system, or a movable jaw system, or a movable segment system.

9. Cooking appliance (1) according to any of the preceding claims, **characterised in that** it comprises a member (16) for the manual control of the locking/unlocking of the lid (3) in relation to the vessel (2), said manual control member (16) being able to move between a locked position and an unlocked position and being connected to said lid (3) and covering element (12) by a movement transformation device designed to transform the movement of the manual control member between its locked and unlocked positions by relative movement of the lid (3) and of the covering element (12) between said first and second configurations.

10. Cooking appliance (1) according to claim 9, **characterised in that** said movement transformation device is designed so that, when the manual control member (16) occupies its locked position, the lid (3) and the covering element (12) are situated in said first configuration, and so that, when the manual control member (16) occupies its unlocked position, the lid (3) and the covering element (1) are situated in said second configuration.

11. Cooking appliance (1) according to any of the preceding claims, **characterised in that** it comprises a bayonet locking system, said covering element (12) being attached to said lid (3) so that the latter can pivot in relation to said covering element (12), the covering element (12) and the vessel (2) being designed to be combined in at least one predetermined relative arrangement enabling said bayonet locking system to lock the lid (3) to the vessel (2) by pivoting of the lid (3) in relation to the covering element (12).

12. Cooking appliance (1) according to claim 11, **characterised in that** said covering element (12) forms a cladding that projects radially from the lid (3) in order to interact mechanically, when the covering element (12) and the vessel (2) are combined in said predetermined relative arrangement, with a complementary element secured to the vessel (2), in order to lock the relative angular positioning of the covering element (12) and vessel (2) in a horizontal plane.
